(19) Europäisches Patentamt European Patent Office Office européen des brevets

(11) **EP 4 382 319 A1**

(12) **EUROPEAN PATENT APPLICATION**

(43) Date of publication:
**12.06.2024 Bulletin 2024/24**

(21) Application number: **22211484.5**

(22) Date of filing: **05.12.2022**

(51) International Patent Classification (IPC):
**B60C 23/04** (2006.01)

(52) Cooperative Patent Classification (CPC):
**B60C 23/0476**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Bridgestone Europe NV/SA**
**1930 Zaventem (BE)**

(72) Inventor: **Testi, Giulio**
**00128 Roma (IT)**

(74) Representative: **Marchetti, Alessio**
**Bridgestone Europe N.V./S.A. - Italian Branch**
**Technical Center**
**Via del Fosso del Salceto, 13/15**
**00128 Roma (IT)**

(54) **TIRE AIR LOSS DETECTION**

(57) A computer-implemented method for detecting air loss in a vehicle tire (3), the method comprising measuring a time series of air temperature values inside the vehicle tire (3); measuring a time series of air pressure values inside the vehicle tire (3); selecting a first group of air temperature values and a second group of air temperature values; selecting, a group of air pressure values; deriving a first air temperature value based at least in part on the first group of air temperature values and deriving a second air temperature value based at least in part on the second group of air temperature values; deriving an air pressure value based at least in part on the group of air pressure values; calculating an estimated air temperature value based at least in part on (i) the derived first or second air temperature value, (ii) the change in temperature between the derived first and second air temperature values, and (ii) a predetermined time constant; calculating an estimated normalised pressure based on the estimated air temperature value and the derived air pressure value; and determining if air loss has occurred based at least in part on monitoring said estimated normalised pressure over time.

Fig. 4

**Description**

Technical Field

The present invention relates to a computer-implemented method for detecting air loss in a vehicle tire. The invention further relates to systems for detecting an air loss in a vehicle tire and to a corresponding computer program for detecting air loss in a vehicle tire.

Background

Being able to detect an air loss in a vehicle tire, which may be associated with a puncture, is important for the safety of the vehicle. Accurate measurements of tire air pressures can be obtained using sensors mounted inside the tire.

A sensor mounted inside a tire is generally referred to as a Tire-Mounted Sensor (TMS). TMSs are used to monitor some parameters of the tire itself, such as the tire air pressure and the tire air temperature, as well as to extract information on the interaction of the tire with its surrounding environment, such as the road or the vehicle.

Most fluctuations in measured tire air pressure are due to changes in the temperature of the tire and the air inside it. These fluctuations are undesirable when looking for potential air loss events. Some current pressure loss detection methods normalise the air pressure in the tires of a vehicle by taking temperature readings alongside the pressure readings, and dividing the pressure readings by the temperature readings, to remove the temperature dependence.

Summary of the Invention

According to a first aspect of the invention, there is provided a computer-implemented method for detecting air loss in a vehicle tire, the method comprising measuring steps and processing steps, the measuring steps comprising:

measuring a time series of air temperature values inside the vehicle tire using an air temperature sensor, and associating a timestamp to each air temperature value; and
measuring a time series of air pressure values inside the vehicle tire using an air pressure sensor, and associating a timestamp to each air pressure value; and

the processing steps comprising:

selecting, from the time series of air temperature values, a first group of air temperature values and associating to it a first group timestamp, wherein the first group comprises at least one measured air temperature value from the time series of air temperature values;
selecting, from the time series of air temperature values, a second group of air temperature values and associating to it a second group timestamp, the second group timestamp being later than the first group timestamp, wherein the second group comprises at least one measured air temperature value from the time series of air temperature values;
selecting, from the time series of air pressure values, a group of air pressure values and associating to it a third group timestamp, the group of air pressure values containing at least one measured air pressure value from the time series of air pressure values, wherein the third group timestamp corresponds to either the first group timestamp or the second group timestamp;
deriving a first air temperature value based at least in part on the first group of air temperature values and deriving a second air temperature value based at least in part on the second group of air temperature values;
deriving an air pressure value based at least in part on the group of air pressure values;
calculating an estimated air temperature value at a time corresponding to the third group timestamp based at least in part on (i) the derived first or second air temperature value corresponding to the third group timestamp, (ii) the change in air temperature between the derived second air temperature value and the derived first air temperature value, and (ii) a predetermined time constant;
calculating an estimated normalised air pressure at a time corresponding to the third group timestamp based on the estimated air temperature value and the derived air pressure value;
determining if air loss occurs based at least in part on monitoring said estimated normalised air pressure over time.

Although it is known to use air temperature readings to normalize tire air pressure readings, the Inventor has recognized that, since the tires, sensors, and sensor casings retain heat, temperature readings are subject to a time lag and so the temperature reading from the air temperature sensor is often slightly behind the actual current temperature of the air in the tire, meaning that even normalised air pressure values still contain anomalies.

It will be appreciated by the person skilled in the art that by normalising air pressure values using an air temperature value which takes into account the way the air temperature is changing, and therefore what the time lag may be, more accurate air pressure normalisation can be achieved compared to normalisation using raw air temperature values. This can result in a series of normalised air pressure values which have fewer fluctuations, making it easier to detect genuine air pressure losses. The method may be particularly advantageous in situations where the temperature of the air in the tire is changing frequently and/or quickly, for example at the beginning of journeys, or during journeys where driving conditions are changeable, such as driving in stop-start traffic.

It will be readily understood by the person skilled in the art that, although the preferred application of the method of the present disclosure is the detection of air loss in a tire, the embodiments described in the present disclosure are also suitable for the detection of a positive pressure change (air gain or inflation).

In embodiments, monitoring said estimated normalised air pressure over time comprises repeating the method such that the measuring and processing steps are carried out continuously.

In embodiments, each estimated air temperature value is calculated according to:

$$T_e(t_3) = T_d(t_3) + \tau \frac{\Delta T_d(t_1, t_2)}{\Delta t}$$

Where $T_e(t_3)$ is the estimated air temperature value at the third group timestamp, $T_d(t_3)$ is the derived first or second air temperature value corresponding to the third group timestamp, $\tau$ is the predetermined time constant, $\Delta t$ is the time difference between the first group timestamp and the second group timestamp, and $\Delta T_d(t_1, t_2)$ is the change in air temperature between the derived second air temperature value and the derived first air temperature value over $\Delta t$.

The Inventor has recognised that, by calculating an estimated air temperature based on not only the change in air temperature but also the predetermined time constant, the method is effectively estimating the amount of air (e.g. number of air moles) inside the tire by taking into account the effect of real-time temperature fluctuations. The method may require very low resources, e.g. in terms of memory occupation, CPU usage, and power (which can be especially important when implementing the method in a TMS system).

In embodiments, the predetermined time constant is related to the thermal capacity of the air temperature sensor. Therefore, the latency of the air temperature sensor can be accounted for in the air temperature readings. It will be understood that during periods where the temperature of the air in the tire is frequently changing, the temperature of the air temperature sensor itself will lag behind the actual temperature of the air, and the magnitude of this lag will depend on the thermal capacity of the air temperature sensor (e.g. its body or casing). By calculating an estimated air temperature value based at least in part on a predetermined time constant which is related to the thermal capacity of the specific air temperature sensor being used to take the readings, the actual current temperature of the air in the tire can be more accurately estimated. It will be understood that the value of the predetermined time constant will vary for different air temperature sensor configurations (e.g. different casing sizes, shapes, materials etc).

In embodiments, the predetermined time constant is calculated using historical air pressure and air temperature data collected using at least the air temperature sensor. Since the time constant is related to the thermal capacity of the air temperature sensor, the historical air temperature data must be collected using the sensor for which the time constant is being predetermined. Since the time constant is not pressure sensor specific, it is not necessary for the historical air pressure data to be collected using the same air pressure sensor as is used in the measuring steps of the first aspect.

In embodiments, the time constant is predetermined by:

obtaining historical air pressure and air temperature data collected using at least the air temperature sensor;
calculating a plurality of series of estimated normalised air pressure values using a plurality of different values for the time constant;
calculating the difference between the maximum estimated normalised air pressure and the minimum estimated normalised air pressure for each series of estimated normalised air pressure values; and
selecting, as the predetermined time constant, the time constant value which minimizes said difference.

In embodiments, deriving a first air temperature value based at least in part on the first group of air temperature values comprises applying a low-pass filter to the first group of air temperature values. In embodiments, deriving a second air temperature value based at least in part on the second group of air temperature values, comprises applying a low-pass filter to the second group of air temperature values. In embodiments, deriving an air pressure value based at least in part on the group of air pressure value comprises applying a low-pass filter to the group of air pressure values.

Deriving air temperature values and/or air pressure values by applying low-pass filters reduces the out-of-band noise by removing small fluctuations in the data.

In embodiments, the low-pass filter comprises a moving average, wherein a plurality of air pressure values and/or air temperature values falling within an averaging time window are averaged to produce filtered air pressure values and/or filtered air temperature values. It will be understood that it will be the filtered (averaged) values which are associated to the group timestamp.

In embodiments, a moving (e.g. rolling) averaging window is used as a low-pass filter. The moving averaging window may have a length between 10 seconds and 1000 seconds, e.g. between 100 second and 500 seconds, e.g. 300 seconds.

In embodiments, detecting air loss comprises comparing the estimated normalised air pressure to an air pressure threshold value, and determining that there is an air loss if the estimated normalised air pressure is lower than the air pressure threshold value.

In embodiments, the method comprises calculating the estimated normalised air pressure at a plurality of times to generate a time series of estimated normalised air pressure values, and determining if an air loss exists by:

> calculating a difference between a maximum estimated normalised air pressure value, and a minimum estimated normalised air pressure value, in the time series of estimated normalised air pressure values;
> comparing the difference to a difference threshold; and
> determining that an air loss exists if the difference is greater than the difference threshold.

In embodiments, the method comprises calculating the estimated normalised air pressure at a plurality of times to generate a time series of estimated normalised air pressure values, and determining if an air loss exists by:

> averaging the estimated normalised air pressure values over a period of time to generate an air pressure reference value;
> determining a difference between an estimated normalised air pressure value and the air pressure reference value; and
> determining that an air loss exists if the magnitude of that difference is greater than the difference threshold.

In embodiments, the method comprises calculating the estimated normalised air pressure at a plurality of times to generate a time series of estimated normalised air pressure values, wherein determining if an air loss exists comprises:

> averaging the estimated normalised air pressure values within a plurality of subsequent time periods to generate a series of average air pressure values; and
> determining that an air loss exists if the average pressure values in the series are trending downwards.

In embodiments, the vehicle tire is one of a plurality of vehicle tires mounted on the same vehicle, and the method comprises calculating a time-series of estimated normalised air pressure values for each of the plurality of tires, wherein determining if an air loss exists in any one of the vehicle tires comprises:
calculating an estimated normalised air pressure rate over a fixed length time window for each of the plurality of tires on the vehicle:

> comparing the estimated normalised air pressure rate of the tire being assessed to one or more of the estimated normalised air pressure rates of the other tires in the plurality of tires on the vehicle; and
> determining, from the comparison, whether the tire being assessed has an anomalous estimated normalised air pressure rate which may be indicative of an air loss in said tire.

In embodiments, the method comprises indicating that air loss in the vehicle tire has been detected. This indication could be by any suitable means. In embodiments, the method comprises indicating to a user (e.g. a driver) via an audio/visual alarm, a dashboard alert, or an alert displayed on a driver's mobile phone app. In yet other embodiments, the indication that air loss in the vehicle tire is detected may be provided in input to a vehicle on-board unit and or to an advanced driver-assistance system (ADAS) for suitable actions to ensure safety of the driver.

In embodiments, the measuring steps and the processing steps are performed simultaneously such that air loss detection is performed in real time. It will be understood that although the first group of measuring steps will need to be performed before the first group of processing steps (because the processing can only be carried out after data has been collected), after this, processing steps and measuring steps will be occurring alongside each other. In other words, the processing steps are performed "on the go" as opposed to processing all of the data in post. That is, all the processing steps are performed at sampling time, which allows to reduce memory usage and improve computational resources because no separate post-processing steps are needed after the sampling phase; such embodiments allow air losses to be determined more quickly while optimising the use of computational resources.

According to a second aspect of the invention, there is provided a system for detecting air loss in a vehicle tire, the system comprising:

an air temperature sensor and an air pressure sensor mounted inside the tire and configured to perform the measuring steps of the first aspect;
a memory configured to store a predetermined time constant which is proportional to the thermal capacity of the air temperature sensor; and
a processor configured to perform the processing steps of the first aspect.

In embodiments, the predetermined time constant is related to the thermal capacity of the air temperature sensor. Therefore, the latency of the air temperature sensor can be accounted for in the air temperature readings. It will be understood that during periods where the temperature of the air in the tire is frequently changing, the temperature of the air temperature sensor itself will lag behind the temperature of the air, and the magnitude of this lag will depend on the thermal capacity of the air temperature sensor (e.g. its body or casing). By calculating an estimated air temperature value based at least in part on a time constant which is related to the thermal capacity of the specific air temperature sensor being used to take the readings, the actual current temperature of the air in the tire can be more accurately estimated. It will be understood that the value of the time constant will vary for different air temperature sensor configurations (e.g. different casing sizes, shapes, materials etc).

In embodiments, the predetermined time constant is calculated using historical air pressure and air temperature data collected using at least the air temperature sensor. Since the predetermined time constant is related to the thermal capacity of the air temperature sensor, the historical air temperature data must be collected using the sensor for which the time constant is being determined. Since the time constant is not pressure sensor specific, it is not necessary for the historical air pressure data to be collected using the same air pressure sensor as is used in the measuring steps of the first aspect.

In embodiments, the time constant is predetermined by:

obtaining historical air pressure and air temperature data collected using at least the air temperature sensor;
calculating a plurality of series of estimated normalised air pressure values using a plurality of different time constant values;
calculating the difference between the maximum estimated normalised air pressure and the minimum estimated normalised air pressure for each series of estimated normalised air pressure values; and
selecting, as the predetermined time constant, the time constant value which minimizes said difference.

In embodiments, the system comprises a tire-mounted sensor (TMS) unit including the air temperature sensor and the air pressure sensor.

In embodiments, the system comprises an air loss indication unit configured to output that an air loss in the vehicle tire has been detected.

In embodiments, the TMS unit comprises a microcontroller including the memory and the processor. The system can therefore be implemented locally at a TMS unit mounted to the vehicle tire.

In embodiments, the system comprises a remote (e.g. cloud-based) server comprising the memory and processor. The remote server may be arranged to receive (e.g. via wireless transmission) the raw air temperature and pressure readings from a TMS unit mounted to a vehicle tire. Multiple TMS units may report their readings to the same remote server, e.g. as part of a fleet management system.

It will of course be appreciated that the term 'server' as used herein means a computer or computing machine (e.g. server device) connected to a network such that the server sends and/or receives data from other devices (e.g. computers or other machines) on that network. Additionally, or alternatively, the server may provide resources and/or services to other devices on the network. The network may be the Internet or some other suitable network. The server may be embodied within any suitable server type or server device, e.g. a file server, application server, communications server, computing server, web server, proxy server, etc. The server may be a single computing device, or may be a distributed system, i.e. the server functionality may be divided across a plurality of computing devices. For example, the server may be a cloud-based server, i.e. its functions may be split across many computers 'on demand'. In such arrangements, server resources may be acquired from one or more data centres, which may be located at different physical locations.

It will thus be appreciated that the processing steps described above which are carried out by the server, may be carried out by a single computing device, i.e. a single server, or by multiple separate computing devices, i.e. multiple servers. For example, all of the processing steps may be carried out by a single server which has access to all the relevant information needed.

According to a third aspect of the invention, there is provided a computer program comprising instructions which, when the program is executed by a computer, cause the computer to perform the measuring steps and carry out the processing steps of the method of the first aspect.

Brief description of the drawings

One or more non-limiting examples will now be described, by way of example only, and with reference to the accompanying figures in which:

Figure 1 is a schematic diagram of a system for detecting an air loss in a vehicle tire, installed on a heavy goods vehicle, according to an embodiment of the invention;
Figure 2 is a schematic diagram of a TMS unit in a vehicle tire;
Figure 3 is a schematic diagram of a system for detecting an air loss in a vehicle tire, installed on a heavy goods vehicle, according to another embodiment of the invention;
Figure 4 is a flow chart illustrating a computer-implemented method for detecting air loss in a vehicle tire;
Figure 5 is a graph illustrating the determination of the time constant;
Figure 6 is a graph showing a plurality of parameters related to tire air pressure plotted over time;
Figure 7a is another graph showing a plurality of parameters related to tire air pressure plotted over time;
Figure 7b is another graph showing a plurality of parameters related to tire air pressure plotted over time, showing an air loss event;
Figure 8 is another graph showing a plurality of parameters related to tire air pressure plotted over a shorter amount of time, showing an air loss event.

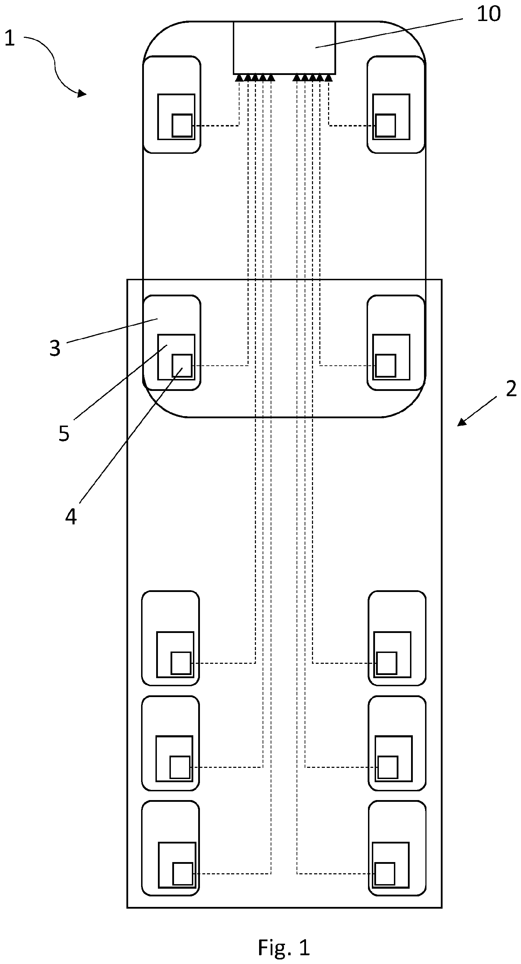

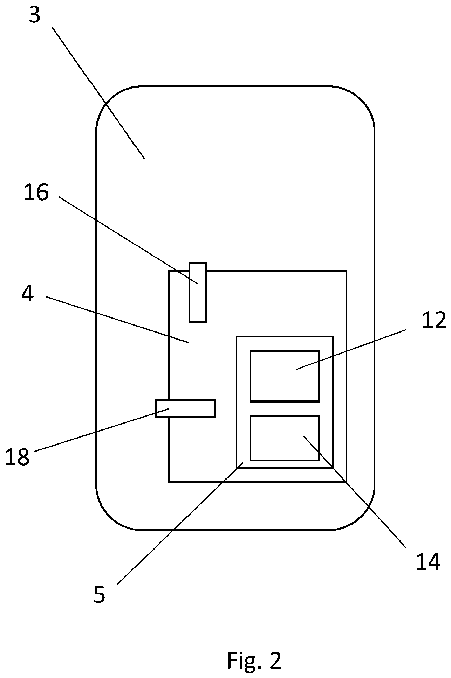

Figure 1 shows a system 1 for detecting an air loss event in a vehicle tire 3 mounted on a vehicle 2 according to an embodiment. The system 1 comprises a plurality of tire-mounted sensor (TMS) units 5, each mounted within a tire 3. The TMS units 5 each include a microcontroller 4 having a memory 12 and a processor 14 (as seen in Fig. 2). The TMS units 5 are configured to communicate with an air loss indication unit 10 in the vehicle, as shown in Figure 1 by the dashed communication lines.

Figure 2 shows a TMS unit 5 in detail. The TMS unit comprises a microcontroller 4, which in turn includes a memory 12 and a processor 14. The TMS unit 5 comprises two sensors, an air temperature sensor 16, and an air pressure sensor 18.

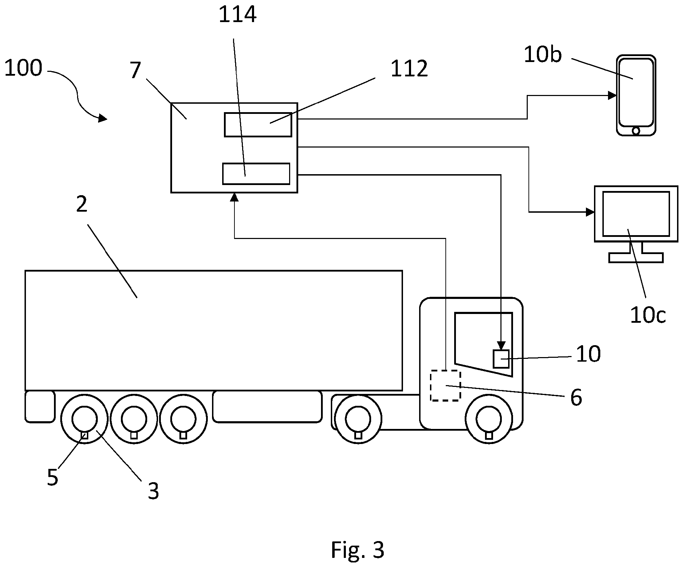

Figure 3 shows a system 100 for detecting an air loss event in a vehicle tire 3 mounted on a vehicle 2 according to another embodiment. Like the system of Figure 1, the system 100 of Figure 3 comprises a plurality of tire-mounted sensor (TMS) units 5, each being mounted within a tire 3. The system 1 of Figure 3 also comprises a network communication device 6 provided in the vehicle 2. In embodiments, the network communication device 6 may be a dongle which is plugged into a port of the vehicle 2 such as an OBD port, FMS port, or other. In alternative embodiments, the network communication device 6 may be a permanently installed transceiver box. The TMS units 5 are configured to communicate with a remote server 7 having a processor 114 and memory 112, via the communication device 6 in the vehicle 2. In this example the TMS units 5 communicate with the network communication device 6 via a Bluetooth® connection. In another example, the TMS units 5 transmit data to the network communication device 6 with 433 MHz FSK modulation. It will be readily understood that any suitable form of short-range wireless communication, or a wired connection, may be used. The network communication device 6 is networked and communicates via a wireless network connection (e.g. cellular network) to the remote server 7. The remote server 7 is connected, via the wireless network, to the air loss indication unit 10a inside the cabin of the vehicle 2. In the illustrated embodiment, a plurality of air loss indication units are provided, further including a driver's mobile device 10b, and a fleet manager's computer 10c.

It will be understood that in the system 1 of Figure 1, since the TMS units 5 comprise microcontrollers 4, any processing is carried out by the microcontrollers 4 and so the system does not need to communicate with a remote server 7. In the system 100 of Figure 3 however, the TMS units 5 communicate (via the communication device 6) with the remote server 7. Since the remote server 7 includes a memory 112 and processor 114, processing is carried out at the remote server 7. The same TMS units 5 shown in Figure 2 may also be used in the system of Figure 3, although the microcontroller 14 may be omitted, not used for the processing steps described herein, or only partly used. In embodiments, the TMS units 5 of the system 100 according to Figure 3 may still have microcontrollers, and processing may be shared between the server 7 and the microcontrollers 4. For example, the microcontrollers 4 may perform edge processing.

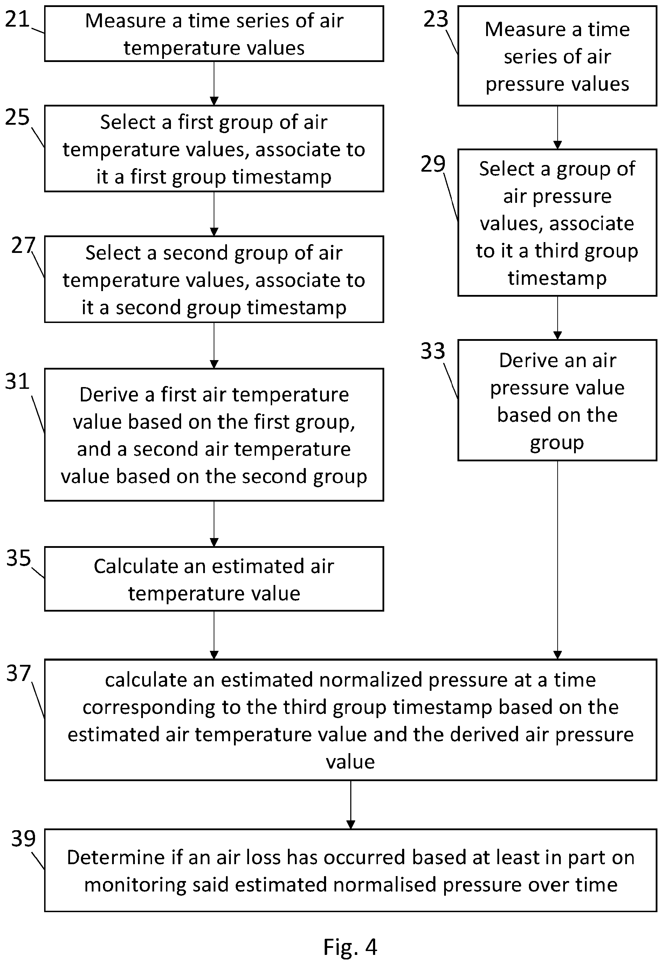

Both the systems 1 of Figure 1 and Figure 3 are operable to carry out the method illustrated by Figure 4, which is described below.

At steps 21 and 23, the air pressure and air temperature sensors 18, 16 in the TMS units 5 are sampled, and a timestamp is associated to each sampled air temperature value and each sampled air pressure value. In an embodiment, the sampling time is constant and may be set, for example, to 15s. In an embodiment, the acquired pressure and temperature samples can be interpolated (resampled) in order to overcome possible problems arising from a not constant sampling time or from the loss of some samples during transmission from the sensors.

The output of steps 21 and 23 are therefore a measured air temperature $T_m$ time series and a measured air pressure $P_m$ time series.

At steps 25 and 27 a first and second group of air temperature values are selected, from the measured air temperature $T_m$ time series, and associated to a first and second group timestamp respectively. The second group timestamp is later than the first group timestamp. In embodiments, the first group may only contain a single air temperature value, although, of course, in other embodiments, the first group may comprise a plurality of air temperature values. In embodiments, the second group may only contain a single air temperature value although, of course, in other embodiments, the second group may comprise a plurality of air temperature values.

At step 29, a group of air pressure values is selected from the measured air pressure $P_m$ time series, and associated to a third timestamp. The third timestamp corresponds to either the first group timestamp, or the second group timestamp. In embodiments, the group may only contain a single air pressure value, although, of course, in other embodiments, the group may comprise a plurality of air pressure values.

At step 31, a first air temperature value is derived based on the first group, and a second air temperature value is derived based on the second group. In embodiments where a group only comprises a single air temperature value, the deriving step simply comprises taking the single value and its timestamp; however, in embodiments where the groups comprise a plurality of values, the derivation comprises processing the plurality of values within the group to generate a single air temperature value for the group as a whole. The single air temperature value is then associated with the group timestamp.

The derivation of a single air temperature value for each group of air temperature values may be performed using any well-known function suitable for the person skilled in the art. In an exemplary embodiment, the derivation comprises applying a filtering function, e.g. a low-pass filter or an averaging function (e.g. calculating the mean), across each group of air temperature values, such that the derived first air temperature value and the derived second air temperature value are, respectively, a filtered or average value.

At step 33, an air pressure value is derived based on the group of air pressure values. In embodiments where the group only comprises a single air pressure value, the deriving step simply comprises taking the single value and its timestamp, however, in embodiments where the group comprises a plurality of values, the derivation comprises processing the plurality of values within the group to generate a single air pressure value for the group as a whole. The single air pressure value is associated with the third group timestamp, which is the same as either the first group timestamp or the second group timestamp.

The derivation of a single air pressure value based on the group of air pressure values may be performed using any well-known function suitable for the person skilled in the art. In an exemplary embodiment, the derivation comprises applying a filtering function, e.g. a low-pass filter or an averaging function (e.g. calculating the mean), across the group of air pressure values, such that the derived air pressure value is a filtered or average value.

In an exemplary embodiment, the derivation of the first air temperature value, second air temperature value and air pressure value are all achieved applying a rolling averaging window having a 300 second length.

The rate at which the derived values are calculated can be decimated, in order to reduce the computational demand. In an exemplary embodiment, the data is decimated to a rate of 60 seconds. If a moving average window is used as filtering function, then the moving average would be considered in this embodiment to have length n=5 (5 x 60s = 300s).

The filtered quantities are obtained at sampling time, therefore with minimal use of CPU resources because no separate post-processing computational phase is required. Memory resources are also optimised by the combined use of sampling and filtering: for example, where a moving average window of length n=5 is used as filtering function for both groups of air temperature values and for the group of air pressure values, the memory required to perform the two moving averages only relates to 3n (i.e. 15) samples, i.e. 5 for pressure and 10 (5x2) for temperature.

At step 35, the estimated air temperature value is calculated, using the derived first and second air temperature values, and a predetermined time constant which is related to (e.g. directly proportional to) the thermal capacity of the air temperature sensor which is embedded into the TMS unit 5. The mathematical description of these physical systems is generally a first order differential equation:

$$T_e(t) = T_m(t) + \tau \frac{dT_m(t)}{dt} \qquad\qquad Equation\ 1$$

where $T_e$ is the estimated real air temperature, $T_m$ is the measured air temperature and $\tau$ is the predetermined time constant (for example, a time constant value predetermined to be directly proportional to the thermal capacity of the thermometer embedded in the TMS units 5). It will be readily understood that, where derived (e.g. filtered/averaged) values of air temperature are being used, $T_m$ is replaced by $T_d$ (the derived air temperature).

In accordance with Equation 1, a real-time numerical solution of the physical model of the air temperature sensor 16 is evaluated.

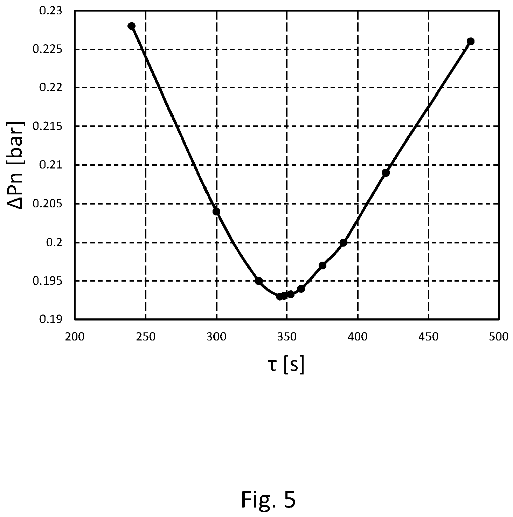

The calculation of the predetermined time constant $\tau$ is discussed below in relation to Figure 5. The time constant $\tau$ is predetermined and may be saved in the memory 12 of the TMS units 5.

Equation 1 is numerically solved by calculating the discrete derivative of $T_d$ and using the predetermined time constant $\tau$ as an estimated value of the system time constant T of the air temperature sensor. Once T has been previously estimated using available (e.g. historical, not real-time) data, the real-time estimated air temperature $T_e$ at a given time $t_3$ corresponding to the third timestamp can be approximated by:

$$T_e(t_3) = T_d(t_3) + \tau \frac{\Delta T_d(t_1, t_2)}{\Delta t} \qquad \textit{Equation 2}$$

Where $T_e(t_3)$ is the estimated air temperature at the third timestamp, $T_d(t_3)$ is the derived air temperature at the third timestamp, $\tau$ is the predetermined time constant, $\Delta t$ is the time difference between the first timestamp and the second timestamp, and $\Delta T_d(t_1, t_2)$ is the change in the derived air temperature over $\Delta t$.

The third timestamp corresponds to either the first group timestamp or the second group timestamp, where the second group timestamp is later than the first group timestamp. When the third timestamp corresponds to the first group timestamp, the quantity $\frac{\Delta T_d(t_1, t_2)}{\Delta t}$ in Equation 2 can be considered a numerical approximation of the right hand derivative; when the third timestamp corresponds to the second group timestamp, the quantity $\frac{\Delta T_d(t_1, t_2)}{\Delta t}$ in Equation 2 can be considered a numerical approximation of the left hand derivative: the two derivatives converge to the same value for a small interval $\Delta t$, with the assumption that the function of the temperature is differentiable in said interval.

Only the air temperature, and not the air pressure, is estimated taking into account the properties of the sensor. This is because the time lag of the measured pressure with respect to the real instantaneous pressure is generally much shorter (e.g. less than 1 second). The pressure time lag can therefore be practically neglected and so, in the described embodiments, it is assumed that the derived (measured) pressure would be the same as an estimated air pressure value ($P_e = P_d$). It will of course be understood that the pressure may also be estimated, taking into account the properties of the air pressure sensor, without departing from the disclosed invention.

At step 37, an estimated normalised air pressure is calculated using the derived air pressure value and the estimated air temperature value according to equation 3:

$$P_{en} = \frac{P_d}{T_e} T_0 \qquad \textit{Equation 3}$$

Where $P_{en}$ is the estimated normalised air pressure, $P_d$ is the derived air pressure, $T_e$ is the estimated air temperature, and $T_0$ is a constant.

$P_{en}$ is an estimation of the pressure that would be consistently measured at the fixed temperature $T_0$: the latter is an arbitrary constant, generally referred to as the reference temperature, that is needed to obtain a quantity with the same units of the pressure. In an exemplary embodiment, $T_0$ = 300 Kelvin, which is associated to the average value of the tire air temperature in Europe.

The $P_{en}$ quantity is also proportional, with good approximation, to the amount of air moles contained inside the vehicle tire based on the gas perfect law when considering the volume constant. It is therefore an accurate representation of whether or not the air content in the vehicle tire is falling, which would be indicative of a puncture.

Finally, at step 39, the estimated normalised air pressure values are used to determine if an air loss has occurred in the vehicle tire 3. It will of course be understood that steps 21-37 are repeated (e.g. continuously) such that a time-series of estimated normalised air pressure values can be generated. Any suitable algorithm can be used to evaluate the estimated normalised air pressure over time in order to determine if an air loss has occurred. Some exemplary algorithms are discussed briefly below but it should be understood that the estimated normalised air pressure values obtained according to the described embodiments could be used in any suitable algorithm for determining if an air loss has occurred.

*Algorithm a)*

The most basic check can be done by comparing the difference between the maximum and minimum values taken by $P_{en}$ with a suitable threshold:

$$\Delta P_{en} = \max(P_{en}) - \min(P_{en}) > P_{thr} \qquad Equation\ 4$$

The $P_{thr}$ can be a predefined value or can be a self-learned value. For example, in the case of a self-learned value, $\Delta P_{en}(t_0)$ can be evaluated in the first few minutes starting at a certain time $t_0$ and then $P_{thr}$ can be created as a function of $\Delta P_{en}(t_0)$.

When $\Delta P_{en} > P_{thr}$ a further check can be done to comparing the current $P_{en}$ with the last average value ($\max(P_{en})$ + $\min(P_{en})$)/2. If $P_{en}$ is greater than the average value then an air fill can be detected. If $P_{en}$ is lower than the average value then an air loss can be detected. The air leak can be more reliably detected and signaled when the above inequality remains true for a certain amount of time.

*Algorithm b)*

The average value $P_{ref}$ of $P_{en}(t)$ can be evaluated over a set time period, and a reference threshold can be created as a function of $P_{ref}$.

When the relation $\Delta P_{en}(t) = |P_{en}(t) - P_{ref}| > P_{thr}$ a further check can be done to verify if the current $P_{en}$ is greater or lower than $P_{ref}$. In the first case a new $P_{ref}$ value can be evaluated, for instance in the case of a tire air fill. In the latter case it is likely that an air loss associated with an air leak such as a puncture is present. The air leak can be more reliably detected and signaled when the above inequality remains true for a certain amount of time.

*Algorithm c)*

The average value of $P_{en}\big|_{t_i+\Delta t}^{t_i}$ over a time $\Delta t$ at each instant $t_i$ can be considered as an estimator of mean air content. The mean air content trend over time can be considered as an estimator of air loss. If the mean air content is constantly decreasing over a period of time, then an air leak is likely.

*Algorithm d)*

The trend of $\min(P_{en})\big|_{t_i+\Delta t}^{t_i}$ evaluated over a fixed time $\Delta t$ at each instant $t_i$ can be used as an indicator of an air leak. If the minimum estimated air content is constantly decreasing over a period of time, then an air leak is likely.

*Algorithm e)*

$P_{en}$ can be evaluated over time for a plurality of tires mounted on the same vehicle. An estimated normalised air pressure rate can be calculated over a fixed length time window for each tire on the vehicle, using $P_{en}$. By comparing the estimated normalized air pressure rate of the tire being assessed to one or more of the estimated normalised air pressure rates of the other tires mounted on the vehicle, anomalous rates of estimated normalised air pressure can be identified. Such an anomalous rate may be indicative of an air leak in the tire being assessed.

With reference to Figure 5, the calculation of the predetermined time constant $\tau$ will now be explained. The predetermined time constant $\tau$ depends on the combined tire and sensor system configuration and needs to be determined only once for a specific system (tire + sensor) configuration.

Once determined it can be used in Equation 2 to perform the real-time estimation of air temperature $T_e(t_s)$ at each time $t_s$.

The predetermined time constant is calculated by applying an error (cost) function to a set of historical air pressure and air temperature data for which is it known than the amount of air in the tire did not change (e.g. there was no air fill or air leak). The error function is defined as:

$$\Delta P_{en}(\tau) = \max \left(P_{en}(\tau, t)\right) - \min \left(P_{en}(\tau, t)\right) \quad Equation\ 5$$

where the time $t \in [T_0, T_1]$ spans over a defined time interval $[T_0, T_1]$ that can be in the range of hours to several months.

The optimal value of T is that which minimizes $\Delta P_{en}(\tau)$. Since it is known that the amount of air in the tire did not change over the course of the collection of the historical data, if the air temperature fluctuations are accurately corrected for (via an accurate $\tau$ value applied via Equation 2) then $\Delta P_{en}(\tau)$ should be close to zero.

Figure 5 shows $\Delta P_{en}$ plotted against T. The data used to create the plot of Figure 5 was generated over a period of 30 days on three steering tires of a heavy goods vehicle. It can be seen that for the specific sensor and tire system configuration on which this historical data was collected, the optimal value of T is close to 350 seconds. This is then recorded in the memory 12 of the TMS units 5 as the predetermined time constant unique to a tire and its TMS.

Through additional experimentation, it has been shown that the $\tau$ estimation done on the small dataset of three tires over 30 days has been proven to function well on a larger dataset composed of over 100 tires mounted on several (>10) trucks running for approximately one year in varying ambient temperature conditions.

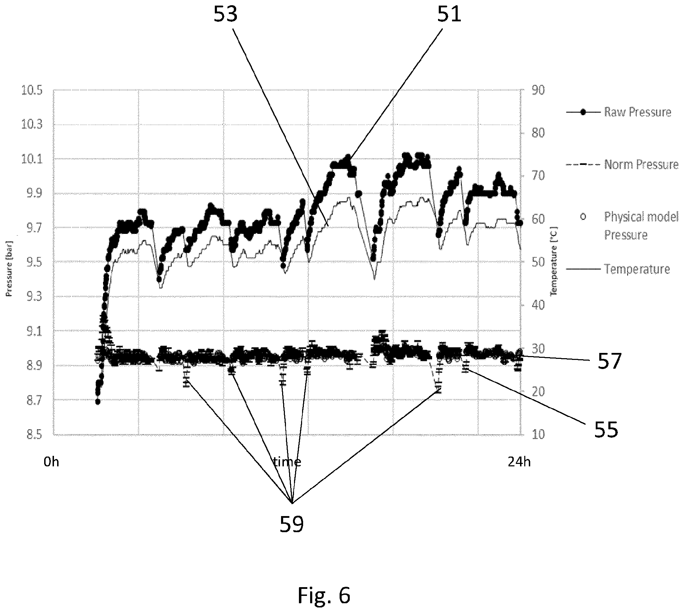

Figure 6 shows real data for air pressure values of a steering tire on a heavy goods vehicle, measured over a 24-hour period, including some stops and restarts.

The uppermost group of datapoints 51 are the raw air pressure readings. Large fluctuations can be seen in the raw air pressure readings 51.

The group of datapoints 53 which runs approximately adjacent to the raw air pressure readings 51 are the raw air temperature readings 53. It can be seen that the fluctuations in the raw air pressure readings 51 follow the fluctuations in the raw air temperature readings 53, but with a slight lag.

Two sets of normalised air pressure values 55, 57 are also shown on the plot. The set of air pressure readings $P_n$ labelled as 55 have been conventionally normalised, simply using the raw air pressure readings 51 and the raw air temperature readings 53. The set of estimated normalised air pressure readings $P_{en}$ labelled as 57 ("physical model pressure") have been calculated according to the physical model described in the present disclosure (see Equation 3 above).

It can be seen from Figure 6 that the physical model evaluated air pressure $P_{en}$ has a residual oscillation in the range of $\Delta P_{en}$= 0.14 bar, whereas the conventionally normalised air pressure $P_n$ is oscillating with a $\Delta P_n$=0.45 bar (about 3 times $\Delta P_{en}$) while the raw air pressure $P_m$ varies in the range of $\Delta P_m$=1.43 bar (about 10 times $\Delta P_{en}$).

The greater oscillation of $P_n$ with respect to $P_{en}$ is predominantly due to transient air pressure values that are not well calculated by $P_n$. Any time the air pressure and air temperature change rapidly, the temperature time lag (related to the thermal capacity of the specific tire and sensor system configuration) produces outlier values in the $P_n$ data set. Such anomalies 59 can clearly be seen in Figure 6. These anomalies can lead to false positives, and air leaks may be detected when no air leak is present. Alternatively, in order to reduce the chance of false positives, the sensitivity of any air loss detection algorithm has to be reduced, but this in turn can lead to slower air loss detection than might otherwise be possible with a more sensitive algorithm. On the contrary the physical normalised air pressure remains much more stable since (as discussed above) the temperature time lag is accounted for. As such, by accounting for the temperature time lag, the likelihood of false positives can be reduced, whilst still maintaining a sensitive air loss detection algorithm.

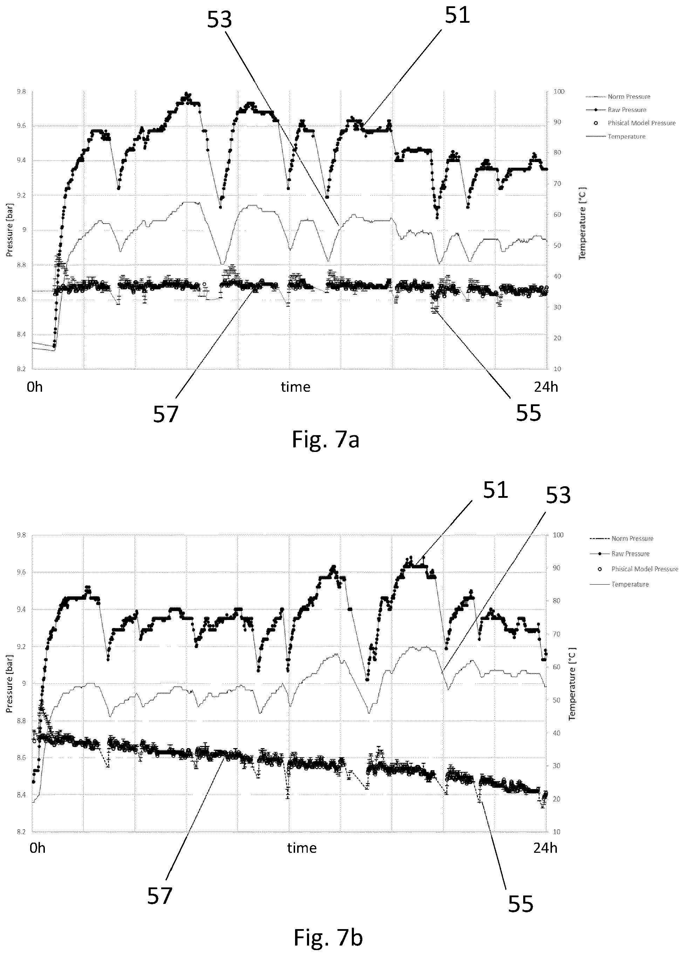

Figures 7a and 7b show the same readings 51, 53, 55, 57 as Figure 6. Figure 7a plots the data from a heavy goods vehicle running for a first trip of 24 hours. Figure 7b plots the data for a second trip, also lasting for 24 hours, but during the second trip, a slow air leakage is present in the tire. Since the conventionally normalised air pressure readings 55 are still affected by anomalous signal spikes, the leakage cannot be as easily detected as it can be using the estimated normalised air pressure readings 57 in Figure 7b.

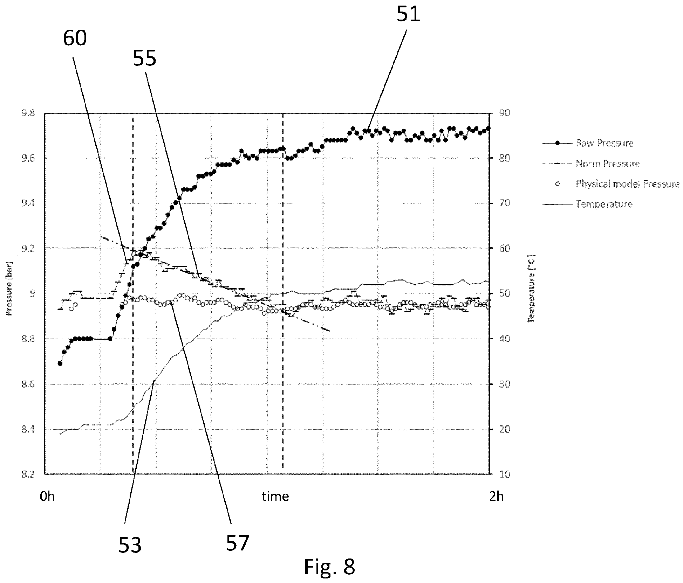

Similarly, Figure 8 shows the same readings 51, 53, 55, 57 as Figure 6, plotted for data from a steering tire on a heavy goods vehicle running for 2 hours. In the conventionally normalised pressure readings 55, an anomaly 60 resulting from an increase in pressure is followed by a downward trend in the next 40 mins. If this parameter $P_n$ (labelled as 55) was being used by an algorithm designed to search for a downward trending pressure, a false positive could be identified here as air loss event. However, it can be seen in Figure 8 that the estimated normalised air pressure readings $P_{en}$ (labelled as 57) stay much flatter and provide a stable signal, which would not trigger a false positive since no anomaly is present.

Therefore, from Figures 7a, 7b, and 8 the advantages associated with the present disclosure can clearly be appreciated.

**Claims**

1. A computer-implemented method for detecting air loss in a vehicle tire, the method comprising measuring steps and processing steps, the measuring steps comprising:

measuring a time series of air temperature values inside the vehicle tire using an air temperature sensor, and associating a timestamp to each air temperature value; and

measuring a time series of air pressure values inside the vehicle tire using an air pressure sensor, and associating a timestamp to each air pressure value; and

the processing steps comprising:

selecting, from the time series of air temperature values, a first group of air temperature values and associating to it a first group timestamp, wherein the first group comprises at least one measured air temperature value from the time series of air temperature values;

selecting, from the time series of air temperature values, a second group of air temperature values and associating to it a second group timestamp, the second group timestamp being later than the first group timestamp, wherein the second group comprises at least one measured air temperature value from the time series of air temperature values;

selecting, from the time series of air pressure values, a group of air pressure values and associating to it a third group timestamp, the group of air pressure values containing at least one measured air pressure value from the time series of air pressure values, wherein the third group timestamp corresponds to either the first group timestamp or the second group timestamp;

deriving a first air temperature value based at least in part on the first group of air temperature values and deriving a second air temperature value based at least in part on the second group of air temperature values;

deriving an air pressure value based at least in part on the group of air pressure values;

calculating an estimated air temperature value at a time corresponding to the third group timestamp based at least in part on (i) the derived first or second air temperature value corresponding to the third group timestamp, (ii) the change in air temperature between the derived second air temperature value and the derived first air temperature value, and (ii) a predetermined time constant;

calculating an estimated normalised pressure at a time corresponding to the third group timestamp based on the estimated air temperature value and the derived air pressure value;

determining if air loss has occurred based at least in part on monitoring said estimated normalised pressure over time.

2. The method of claim 1 wherein each estimated air temperature value is calculated according to:

$$T_e(t_3) = T_d(t_3) + \tau \frac{\Delta T_d(t_1, t_2)}{\Delta t}$$

Where $T_e(t_3)$ is the estimated air temperature value at the third group timestamp, $T_d(t_3)$ is the derived first or second air temperature value corresponding to the third group timestamp, $\tau$ is the predetermined time constant, $\Delta t$ is the time difference between the first group timestamp and the second group timestamp, and $\Delta T_d(t_1, t_2)$ is the change in air temperature between the derived second air temperature value and the derived first air temperature value over $\Delta t$.

3. The method of any preceding claim, wherein the predetermined time constant is related to the thermal capacity of the temperature sensor.

4. The method of claim 3 wherein the predetermined time constant is calculated using historical air pressure and air temperature data collected using at least the temperature sensor.

5. The method of any preceding claim, wherein the time constant is predetermined by:

obtaining historical air pressure and air temperature data collected using at least the temperature sensor;

calculating a plurality of series of estimated normalised air pressure values using a plurality of different time constant values;

calculating the difference between the maximum estimated normalised air pressure and the minimum estimated normalised air pressure for each series of estimated normalised air pressure values; and

selecting, as the predetermined time constant, the time constant value which minimizes said difference.

6. The method of any preceding claim, wherein deriving a first air temperature value based at least in part on the first group of air temperature values comprises applying a low-pass filter to the first group of air temperature values;

   and/or wherein deriving a second air temperature value based at least in part on the second group of air temperature values, comprises applying a low-pass filter to the second group of air temperature values;
   and/or wherein deriving an air pressure value based at least in part on the group of air pressure value comprises applying a low-pass filter to the group of air pressure values.

7. The method of claim 6, wherein the low-pass filter comprises a moving average, wherein a plurality of air pressure values and/or air temperature values falling within an averaging time window are averaged to produce a filtered air pressure values and/or filtered air temperature values.

8. The method of any preceding claim, wherein detecting air loss comprises comparing the estimated normalised air pressure to an air pressure threshold value, and determining that there is an air loss if the estimated normalised air pressure is lower than the air pressure threshold value.

9. The method of any of claims 1 to 7, comprising:
   calculating the estimated normalised air pressure at a plurality of times to generate a time series of estimated normalised air pressure values, wherein determining if an air loss exists comprises:

   averaging the estimated normalised air pressure values within a plurality of subsequent time periods to generate a series of average air pressure values; and
   determining that an air loss exists if the average pressure values in the series are trending downwards.

10. The method of any of claims 1 to 7, wherein the vehicle tire is one of a plurality of vehicle tires mounted on the same vehicle, wherein the method comprises calculating a time series of estimated normalised air pressure values for each of the plurality of tires, wherein determining if an air loss exists in any one of the vehicle tires comprises:
    calculating an estimated normalised air pressure rate over a fixed length time window for each of the plurality of tires on the vehicle:

    comparing the estimated normalised air pressure rate of the tire being assessed to one or more of the estimated normalised air pressure rates of the other tires in the plurality of tires on the vehicle; and
    determining, from the comparison, whether the tire being assessed has an anomalous estimated normalised air pressure rate which may be indicative of an air loss in said tire.

11. The method of any preceding claim, further comprising: indicating that air loss in the vehicle tire has been detected.

12. A system for detecting an air loss in a vehicle tire, the system comprising:

    an air temperature sensor and an air pressure sensor mounted inside the tire and configured to perform the measuring steps of claim 1;
    a memory configured to store a predetermined time constant; and
    a processor configured to perform the processing steps of any preceding claim.

13. The system of claim 12, comprising a tire-mounted sensor (TMS) unit including the air temperature sensor and the air pressure sensor.

14. The system of claim 12 or claim 13, comprising an air loss indication unit configured to output that an air loss in the vehicle tire has been detected.

15. A computer program comprising instructions which, when the program is executed by a computer, cause the computer to perform the measuring steps of claim 1 and carry out the processing steps of any of claims 1 to 11.

Fig. 1

Fig. 2

Fig. 3

21 — Measure a time series of air temperature values

23 — Measure a time series of air pressure values

25 — Select a first group of air temperature values, associate to it a first group timestamp

29 — Select a group of air pressure values, associate to it a third group timestamp

27 — Select a second group of air temperature values, associate to it a second group timestamp

33 — Derive an air pressure value based on the group

31 — Derive a first air temperature value based on the first group, and a second air temperature value based on the second group

35 — Calculate an estimated air temperature value

37 — calculate an estimated normalized pressure at a time corresponding to the third group timestamp based on the estimated air temperature value and the derived air pressure value

39 — Determine if an air loss has occurred based at least in part on monitoring said estimated normalised pressure over time

Fig. 4

Fig. 5

Fig. 6

Fig. 7a

Fig. 7b

Fig. 8

Europäisches
Patentamt

European
Patent Office

Office européen
des brevets

# EUROPEAN SEARCH REPORT

Application Number

EP 22 21 1484

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 767 384 A2 (BERU AG [DE]) 28 March 2007 (2007-03-28) * paragraph [0025] – paragraph [0034]; figures 1-3 * | 1-15 | INV. B60C23/04 |
| A | JP 2021 195091 A (BRIDGESTONE CORP) 27 December 2021 (2021-12-27) * paragraph [0018] – paragraph [0082]; figures 1-7 * | 1-13 | |
| A | JP 2005 225297 A (TOYOTA MOTOR CORP) 25 August 2005 (2005-08-25) * paragraph [0008] – paragraph [0015]; figures 1-5 * | 1-13 | |

TECHNICAL FIELDS SEARCHED (IPC)

B60C

The present search report has been drawn up for all claims

| Place of search | Date of completion of the search | Examiner |
|---|---|---|
| Munich | 13 April 2023 | Billen, Karl |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 1484

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2023

| Patent document cited in search report | | Publication date | Patent family member(s) | | Publication date |
|---|---|---|---|---|---|
| EP 1767384 | A2 | 28-03-2007 | AT<br>DE<br>EP<br>US | 532650 T<br>102005045687 A1<br>1767384 A2<br>2007073503 A1 | 15-11-2011<br>05-04-2007<br>28-03-2007<br>29-03-2007 |
| JP 2021195091 | A | 27-12-2021 | NONE | | |
| JP 2005225297 | A | 25-08-2005 | NONE | | |

EPO FORM P0459

For more details about this annex : see Official Journal of the European Patent Office, No. 12/82